# EUROPEAN PATENT SPECIFICATION

(11) **EP 0 426 847 B1**
(45) Date of publication and mention of the grant of the patent: **08.10.1997**
(21) Application number: 89908868.6
(22) Date of filing: 29.07.1989
(51) Int. Cl.: G06T 17/00

(54) **THREE-DIMENSIONAL IMAGE DISPLAY**
DREIDIMENSIONALE BILDVORFÜHRUNG
SYSTEME D'AFFICHAGE D'IMAGES TRIDIMENSIONNELLES

(30) Priority: 29.07.1988 JP 190132/88
(43) Date of publication of application: 15.05.1991
(73) Proprietor: YOKOGAWA MEDICAL SYSTEMS, LTD, Hino-shi, Tokyo 191 (JP)
(72) Inventor: KAWANAKA, Tatsuo, Meguro-ku Tokyo 152 (JP)
(74) Representative: Henkel, Feiler, Hänzel & Partner
(86) International application number: JP8900785
(87) International publication number: WO9001746

(56) References cited:
- EP-A- 0 246 010
- EP-A- 0 270 319
- JP-A- 6 346 575
- JP-A-63 177 265

## Description

### TECHNICAL FIELD

This invention relates to a three-dimensional image display device for displaying a three-dimensional image of a body as viewed in any desired direction on the basis of image data representative of a body contour.

### BACKGROUND ART

In three-dimensional image display devices, data representing a body contour ( referred to as a surface model ) in the form of three-dimensional position coordinates and normal vectors is stored in a storage unit, and using this data, an image of the body as viewed in any desired direction is displayed. Since the data stored in the storage unit is of the three-dimensional type, its volume when finely representing the body contour becomes large. Therefore, the quantity of calculation necessary in converting image data to obtain an image corresponding to any desired direction also becomes large. Conventionally, the direction in which the body is viewed is generally set by interactive control. In such an interactive control operation, numeric data representative of the direction is entered through an input unit such as a keyboard into a three-dimensional image display device. However, since the numeric data representative of the direction is less intuitive, it is very difficult for an operator to handle. To facilitate controlling, a realtime control system is also known. In such a system, a kind of hardware exclusive to conversion calculation is used to shorten the time of conversion calculation necessary to obtain an image as viewed in any desired direction, whereby the direction of a display image can be changed in realtime manner in linked relation to the operation of a coordinate input unit such as a track ball. However, such a device as including specific hardware is very expensive and poor in applicability.

Prior art JP-A-63-46575 discloses a three-dimensional image display device for displaying a three-dimensional image of a body as viewed in any desired direction on the basis of two-dimensional image data. Moreover it is generally known in the art to convert very high resolution images into images of a lesser resolution in order to perform image processing operations more easily (see e.g. EP-A-270319).

### DISCLOSURE OF THE INVENTION

It is an object of the present invention to provide a three-dimensional image display device which makes it possible in realtime manner to intuitively set the direction in which a body is viewed without the use of hardware exclusive to conversion calculation.

The present invention provides a three-dimensional image display device as claimed in claim 1.

### BRIEF DESCRIPTION OF THE DRAWINGS

Fig. 1 is a block diagram of an embodiment of the present invention; and
Figs. 2 through 5 are diagrams explanatory of a display screen in the embodiment of the present invention.

### BEST MODE FOR CARRYING OUT THE INVENTION

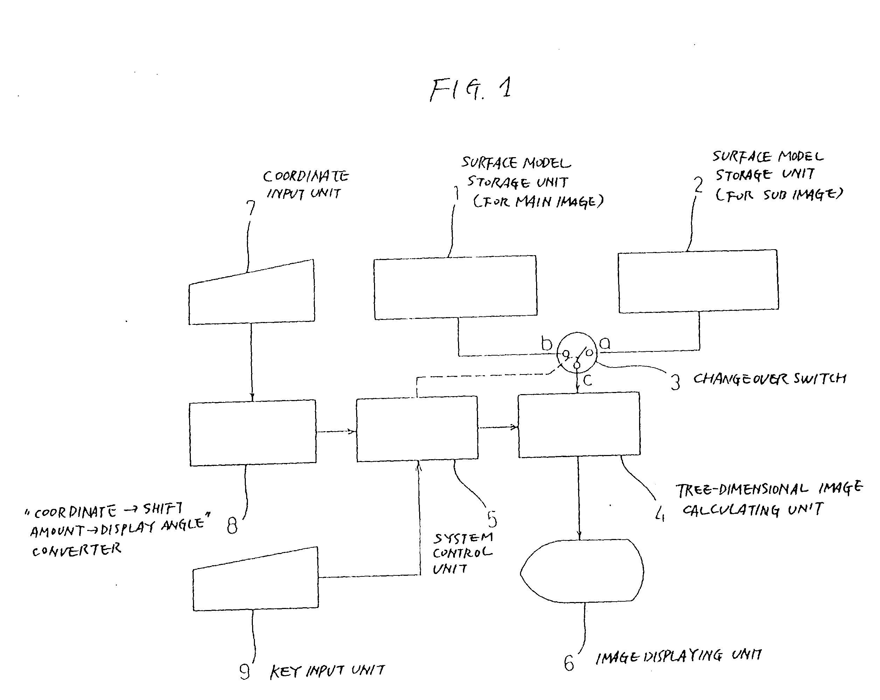

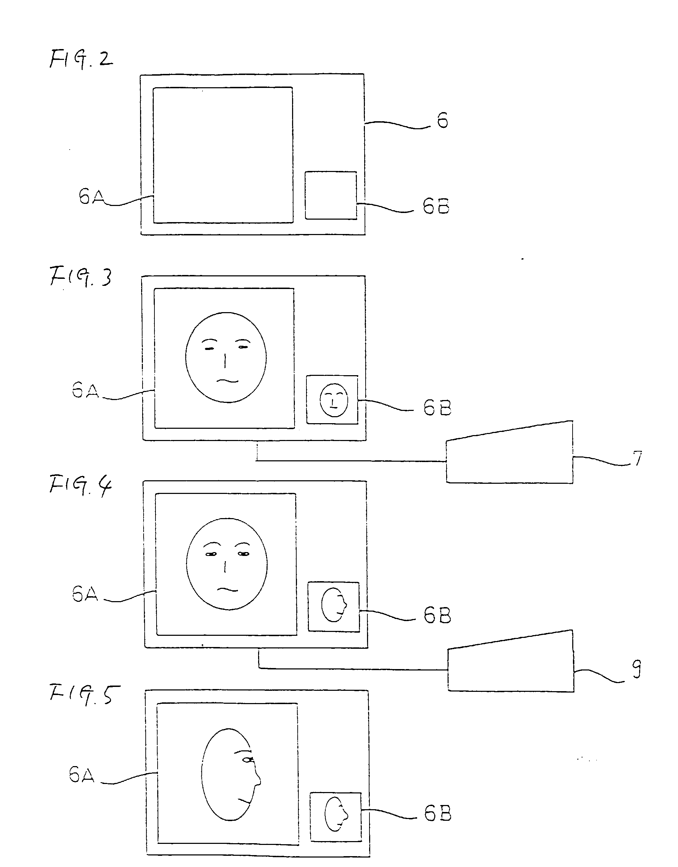

In Fig. 1, 1 and 2 are surface model storage units for storing main-image data and sub-image data, respectively, of a surface model. The main-image data is all data representative of the surface model. The sub-image data is data representative of a sub image, i.e. a reduced image of the surface model, which is very small in the number of data components or very low in density as compared with the main-image data. 3 is a changeover switch for selecting the data of either surface model storage unit 1 or 2. The data selected by the changeover switch 3 is applied to a three-dimensional image calculating unit 4. The changeover switch 3 is controlled by a system control unit 5, whose movable arm c is normally held in contact with a contact a, but on occasion is brought into contact with another contact b. The three-dimensional image calculating unit 4 calculates, from the data applied through the changeover switch 3, a three-dimensional image whose direction conforms to a display direction specified by a control signal given from the system control unit 5, the calculated image being displayed by an image displaying unit 6. 7 is a coordinate input unit including, for example, a track ball, which is controlled by an operator to set the direction of an image to be displayed by the image displaying unit 6. A coordinate signal generated by the coordinate input unit 7 is applied to a display angle converter 8. The display angle converter 8 calculates the amount of shift from the applied coordinate data changing from time to time, converts into image direction data, and applies to the system control unit 5. The system control unit 5 controls the three-dimensional image calculating unit 4 in accordance with the applied data. 9 is a key innut unit which is controlled by the operator to send a signal to the system control unit 5. The foregoing three-dimensional image display device can be embodied using a computer which is equipped with a storage unit and an operator-controlled input/output unit and programmed properly for such purposes.

The operation of the foregoing device will be described with reference to Figs. 2 through 5. In these drawings, components identical with those shown in Fig. 1 are designated by the same reference numerals. 6A is a main-image screen of the image displaying unit 6, 6B is a sub-image screen, and these screens display a main image and a sub image as illustrated in Fig. 3.

The sub-image data stored in the surface model storage unit 2 is applied through the changeover switch 3 to the three-dimensional image calculating unit 4 in which the data is converted into image data whose direction is in conformity with the control signal from the system control unit, the resulting data being displayed on the sub-image screen 6B of the image displaying unit 6. When the operator controls the key input unit 9 to cause the system control unit 5 to change over the changeover switch 3, the main-image data stored in the surface model storage unit 1 is applied to the three-dimensional image calculating unit 4 in which the data is converted into image data whose direction is in conformity with the control signal from the system control unit, the resulting data being displayed on the main-image screen 6A of the image displaying unit 6. When the control signal from the system control unit 5 specifies a frontal direction, the screens display a main image and a sub image as illustrated in Fig. 3.

In the condition of Fig. 3, when the operator turns the track ball or the like of the coordinate innut unit 7 in a desired direction, the coordinate data to be applied to the display angle converter 8 is changed. The display angle converter 8 converts the applied input signal into display angle data and applies to the system control unit 5. The system control unit 5 applies the control signal based on the display angle data to the three-dimensional image calculating unit 4. The three-dimensional image calculating unit 4 performs calculation in the sub-image data of the surface model storage unit 2 in accordance with the current control signal, the resulting image data being displayed on the sub-image screen 6B of the image displaying unit 6. The foregoing calculation and display-ing of the sub image are performed repeatedly while the track ball or the like of the coordinate input unit 7 is turning. Since the sub-image data of the surface model storage unit 2 is very small in the number of data components as compared with the main-image data of the surface model storage unit 1, the calculation and displaying of the sub image can be performed in realtime manner. Therefore, the sub image displayed on the sub-image screen 6B changes its direction in linked relation to the turning of the track ball or the like. By observing the displayed sub image, the operator can confirm how the image is seen after its display direction is changed. After confirming the direction of the sub image as illustrated in Fig. 4, for example, the operator controls the key input unit 9 to cause the system control unit 5 to change over the changeover switch 3. As a result, the main-image data stored in the surface model storage unit 1 is applied to the three-dimensional image calculating unit 4 in which the data is converted into image data whose direction is in conformity with the control signal from the system control unit, the resulting data being displayed on the main-image screen 6A of the image displaying unit 6. In this way, the main image is converted as to have the same direction as that of the sub image and displayed with a desired direction, as illustrated in Fig. 5. Although the changeover switch 3 is changed over by controlling the key input unit 9, it may be changed over by the determination of the system control unit 5 that is issued if the coordinate data from the coordinate input unit 7 remains unchanged for a given interval of time, i.e. if the operator does not change the display direction of an image for a given interval of time or more.

In this way, the direction of only the sub image whose number of image data components is small is changed in realtime manner, and when it is confirmed that the image as viewed has a desired direction, the direction of the main image is changed at once, whereby the main image having a desired direction can be readily obtained.

The present invention should not be limited to the foregoing embodiment. Where the body to be displayed has no distinct direction as is the case of a tumor or internal organs, the body on which the main image is based is not used as the base of the sub image, but a different body ( such as a bone ) which occupies the same position and whose direction can be readily perceived is used as the base of the sub image, whereby the direction of the sub image can be readily determined. In this case, image data of, for example, a bone is previously stored in the surface model storage unit 2. The coordinate innut unit 7 may be of any type which can enter position information continuously, such as a mouse or joystick.

## Claims

1. A three-dimensional image display device for displaying a three-dimensional image of a body as viewed in any desired direction comprising main-image surface model storage means (1) for storing all data representative of a surface model which defines a body contour of said body and is formed by main-image data, characterized by further comprising:
sub-image surface model storage means (2) for storing data representative of a reduced image of the surface model, said reduced image representing sub-image data which have a number of data which is substantially small as compared with the number of said main-image data, and said sub-image surface model storage means (2) being suitable for producing the sub-image data on the basis of a different body which occupies the same position as said body of a main-image is in, whose direction can be readily perceived and whose image data are previously stored in said sub-image surface model storage means (2);
coordinate input means (7) for continuously entering a change in the direction of an image, and for generating output coordinate data;
means (8, 5) for converting said output coordinate data generated from said coordinate input means (7) into angle data representative of the image direction, and for generating a control signal for switching over the output of the surface model storage means (1, 2);
changeover means (3) for switching over from the output of said sub-image surface model storage means (2) to the output of said main-image surface model storage means (1) in response to said control signal from said converting means (8, 5);
three-dimensional image calculating means (4) for receiving said output of said sub-image surface model storage means (2) through said changeover means (3), and for performing the calculation of converting the surface model data from said sub-image surface model storage means (2) into three-dimensional image data whose direction conforms to a display direction specified by said angle data generated from said converting means (8, 5), and for receiving said output of said main-image surface model storage means (1) through said changeover means (3), and for performing the calculation of converting the surface model data from said main-image surface model storage means (1) into three-dimensional image data whose direction conforms to the display direction of the sub-image surface model, and for calculating output display signals from said three-dimensional image data of said main-image and said sub-image data; and
image displaying means (6) for displaying said main image and said sub-image generated from said three-dimensional image calculating means (4) on a screen.

## Patentansprüche

1. Dreidimensionalbild-Anzeigevorrichtung zum Anzeigen bzw. Wiedergeben eines dreidimensionalen Bilds eines Körpers, in einer gewünschten Richtung gesehen, umfassend eine Hauptbild-Oberflächenmodellspeichereinheit (1) zum Speichern aller Daten, die für ein Oberflächenmodell repräsentativ sind, welches eine Körperkontur des Körpers definiert und durch Hauptbilddaten geformt ist, gekennzeichnet durch
eine Nebenbild-Oberflächenmodellspeichereinheit (2) zum Speichern von für ein verkleinertes Bild des Oberflächenmodells repräsentativen Daten, welches verkleinerte Bild Nebenbilddaten repräsentiert, die eine Datenzahl aufweisen, welche im Vergleich zur Zahl der Hauptbilddaten im wesentlichen klein ist, und welche Nebenbild-Oberflächenmodellspeichereinheit (2) geeignet ist zum Erzeugen von Nebenbilddaten auf der Grundlage eines unterschiedlichen Körpers, welcher die gleiche Position, in der sich der Körper eines Hauptbilds befindet, einnimmt und dessen Richtung einfach erfaßt werden kann und dessen Bilddaten im voraus in der Nebenbild-Oberflächenmodellspeichereinheit (2) (ab) gespeichert sind,
eine Koordinateneingabeeinheit (7) zum kontinuierlichen Eingeben einer Änderung in der Richtung eines Bilds und zum Erzeugen von Ausgangskoordinatendaten,
Einheiten (8, 5) zum Umwandeln der von der Koordinateneingabeeinheit (7) generierten Ausgangskoordinatendaten in für die Bildrichtung repräsentative Winkeldaten und zum Erzeugen eines Steuersignals zum Umschalten des Ausgangs von den Oberflächenmodellspeichereinheiten (1, 2),
eine Umschalteinheit (3) zum Umschalten vom Ausgang der Nebenbild-Oberflächenmodellspeichereinheit (2) auf den Ausgang der Hauptbild-Oberflächenmodellspeichereinheit (1) in Abhängigkeit vom Steuersignal von den Wandlereinheiten (8, 5),
eine Dreidimensionalbild-Recheneinheit (4) zum Abnehmen des Ausgangssignals von der Nebenbild-Oberflächenmodellspeichereinheit (2) über die Umschalteinheit (3) und zur Durchführung der Berechnung zum Umwandeln der Oberflächenmodelldaten von der Nebenbild-Oberflächenmodellspeichereinheit (2) in Dreidimensional-Bilddaten, deren Richtung einer Anzeigerichtung entspricht, welche durch die von den Wandlereinheiten (8, 5) generierten Winkeldaten spezifiziert ist, sowie zum Abnehmen des Ausgangssignals von der Hauptbild-Oberflächenmodellspeichereinheit (1) über die Umschalteinheit (3) und zur Durchführung der Berechnung zum Umwandeln der Oberflächenmodelldaten von der Hauptbild-Oberflächenmodellspeichereinheit (1) in Dreidimensional-Bilddaten, deren Richtung der Anzeigerichtung des Nebenbild-Oberflächenmodells entspricht, und zum Berechnen von Ausgangsanzeigesignalen aus den Dreidimensional-Bilddaten der Hauptbild- und der Nebenbilddaten, und
eine Bildanzeigeeinheit (6) zum Wiedergeben des Hauptbilds und des Nebenbilds, die durch die Dreidimensionalbild-Recheneinheit (4) erzeugt (worden) sind, auf einem Bildschirm.

## Revendications

1. Système d'affichage d'images tridimensionnelles destiné à afficher une image tridimensionnelle d'un corps tel qu'il est vu dans n'importe quelle direction souhaitée comprenant des moyens (1) de stockage de modèle de surface d'image principale destinés à stocker toutes les données représentatives d'un modèle de surface qui définit un contour de corps dudit corps et est formé par des données d'image principale, caractérisé en ce qu'il comprend en outre :
des moyens (2) de stockage de modèle de surface de sous-image pour stocker des données représentatives d'une image réduite du modèle de surface, ladite image réduite représentant des données de sous-image qui comportent un nombre de données qui est sensiblement petit comparé au nombre desdites données de sous-image, et lesdits moyens (2) de stockage de modèle de surface de sous-image étant appropriés pour produire les données de sous-image sur la base d'un corps différent qui occupe la même position que celle dans laquelle est ledit corps d'une image principale, dont la direction peut facilement être perçue et dont les données d'images sont précédemment stockées dans lesdits moyens (2) de stockage de modèle de surface de sous-image ;
des moyens d'entrée de coordonnées (7) destinés à entrer en continu un changement de direction d'une image et générer des données de coordonnées de sortie ;
des moyens (8, 5) de conversion desdites données de coordonnées de sortie générées à partir desdits moyens d'entrée de coordonnées (7) en données d'angle représentatives de la direction de l'image, et générer un signal de commande pour commuter la sortie des moyens (1, 2) de stockage de modèle de surface ;
des moyens de commutation (3) destinés à passer de la sortie desdits moyens (2) de stockage de modèle de surface de sous-image à la sortie desdits moyens (1) de stockage de modèle de surface d'image principale en réponse audit signal de commande provenant desdits moyens de conversion (8, 5) ;
des moyens (4) de calcul d'images tridimensionnelles destinés à recevoir ladite sortie desdits moyens (2) de stockage de modèle de surface de sous-image par l'intermédiaire desdits moyens de commutation (3), et à effectuer le calcul de conversion des données du modèle de surface provenant desdits moyens (2) de stockage de modèles de surface de sous-image en données d'images tridimensionnelles dont la direction se conforme à une direction d'affichage spécifiée par lesdites données d'angle générées à partir desdits moyens de conversion (8, 5), et à recevoir ladite sortie desdits moyens (1) de stockage de modèle de surface d'image principale par l'intermédiaire desdits moyens de commutation (3), et à effectuer le calcul de conversion des données de modèle de surface à partir desdits moyens (1) de stockage de modèle de surface d'image principale en données d'images tridimensionnelles dont la direction se conforme à la direction d'affichage du modèle de surface de sous-image, et à calculer les signaux d'affichage de sortie à partir desdites données d'images tridimensionnelles desdites données d'image principale et de sous-image ; et
des moyens d'affichage d'image (6) destinés à afficher ladite image principale et ladite sous-image générées à partir desdits moyens (4) de calcul d'images tridimensionnelles sur un écran.
